# EUROPEAN PATENT SPECIFICATION

(11) **EP 3 165 987 B1**
(45) Date of publication and mention of the grant of the patent: **02.03.2022**
(21) Application number: 16196591.8
(22) Date of filing: 31.10.2016
(51) Int. Cl.: G05D 16/16, G05D 16/00

(54) **FLUSHING MEANS FOR VALVE**
SPÜLUNGSEINRICHTUNG FÜR VENTIL
MOYENS DE RINÇAGE DE SOUPAPE

(30) Priority: 05.11.2015 DK 201500684
(43) Date of publication of application: 10.05.2017
(73) Proprietor: Danfoss A/S, 6430 Nordborg (DK)
(72) Inventor: RUSTJA, Bozidar, 1291 Skofljica (SI); GUSTINCIC, Matjaz, 6230 Postojna (SI)

(56) References cited:
- EP-A1- 2 848 846
- US-A- 5 183 074
- US-A- 5 964 408

## Description

The present invention relates to a differential pressure valve with a valve part comprising a valve housing with a flow communication from a fluid inlet to a flow outlet and a valve seat positioned within said flow communication, and a valve cone adapted to change position to change the valve opening defined as the opening between the valve seat and valve cone. The valve part further comprise a membrane adapted to deflect under the influence of a differential pressure across said membrane and means to communicate pressures to the opposing sides of the membrane, where these means may be affected by an auxiliary valve formed in relation to the differential pressure valve.

### BACKGROUND

It is well known to introduce pressure balancing valves into flow systems with variable flows pressure fluctuations, such as within the field of district heating, or heating of domestic housings in general. A typical pressure balancing valve comprises a membrane deflecting according to a pressure difference over it and by this deflection regulates the orifice through a valve seat by changing the position of a valve cone relative to a valve seat. The membrane typically is biased such as by a spring in a regulation part of the valve where the regulation part may comprise means that enables the biasing to be adjusted such as to adjust the pressure setpoint.

Sometimes it is relevant to flush the system such as when installing the valve in a flow communicating system, such as pipes, radiators etc. During flush it is an advantage if the valve offers low obstruction to the flow and thus that the valve may be kept open.

One system including flushing is to be seen in the US patent publication 5,964,408 relating to a valve used in an irrigation sprinkler and disclosing a pilot valve operating such that the opening and closing of the valve are actuated by a pilot valve which controls a very small flow of water into a bonnet chamber. The bonnet chamber has an inlet through a piston. Flushing is possible during building up pressure for closing the flow control valve.

Another citation D2 = EP 2 848 846 may disclose a similar flow control valve including a membrane for pressure regulation, and where the flow control valve mechanically can be fixed in an open position for flushing.

### SUMMARY OF THE INVENTION

The present invention introduces a solution as given in the claims. This includes introducing a valve with a valve part formed in a valve housing that comprises a flow communication from a fluid inlet to a flow outlet and a valve seat positioned within said flow communication, a valve cone adapted to change position where said position defines the valve opening being the opening between the valve seat and valve cone, the valve further comprising a membrane adapted to deflect under the influence of a differential pressure across said membrane, and first means and second means to communicate pressures to the opposing sides of the membrane, wherein an auxiliary valve is connected to the valve in an opening and closing relation to one of said first means and second means.

When closing the auxiliary valve only one of the two opposing sides of the membrane will be in pressure communication, such as to a position and a flow circuit whereto the valve is connected, thus ensuring full deflection in one direction of the membrane and thus valve cone. By this, if this direction is set to be the opening direction of the valve, then when flushing the pressures from the flushing fluid ensures to keep the valve open.

To form the pressure connections one or both of the first and second means to communicate pressures is connected to the flow circuit through communicating means such as impulse tubes, and in an embodiment the auxiliary valve is connected to the flow communicating means. When using a standard valve such as e.g. a ball valve connected to a section of the communication means (e.g. impulse tube) possible fixed to one of the first or second communication means a cheap and simple manner of forming means to keep the valve open during flushing is introduced,

In an embodiment the auxiliary valve at least partly is integrated into the valve housing, this offering the possibility to introduce a compact valve. The auxiliary valve still may be a simple standard valve, e.g. a ball valve.

In an embodiment to form a compact valve then the membrane is positioned within the valve housing. In an embodiment a regulation part is connected to the valve part including biasing means acting on the membrane, where in an embodiment the regulation part comprises means for changing the strength whereby the biasing means acts on the membrane. This offers the possibility to seal the regulation part from the valve part and making the two parts detachable from each other, even when the valve is installed in the flow circuit. Further, the regulation part may be formed of cheap materials as it does not come in contact with the fluids of the flow circuit.

In an embodiment the method to operate a valve during is to introduce a valve comprising a membrane adapted to deflect under the influence of a differential pressure across said membrane, and first means and second means to communicate pressures to the opposing sides of the membrane, the method being to close the one of the first means and second means communicating a pressure to the membrane in the closing direction.

### FIGURES

- Fig. 1: A differential pressure valve.
- Fig.2: A differential pressure valve connected to a flow circuit.
- Fig. 3: A differential pressure valve with an auxiliary valve.

### DETAILED DESCRIPTION OF THE INVENTION

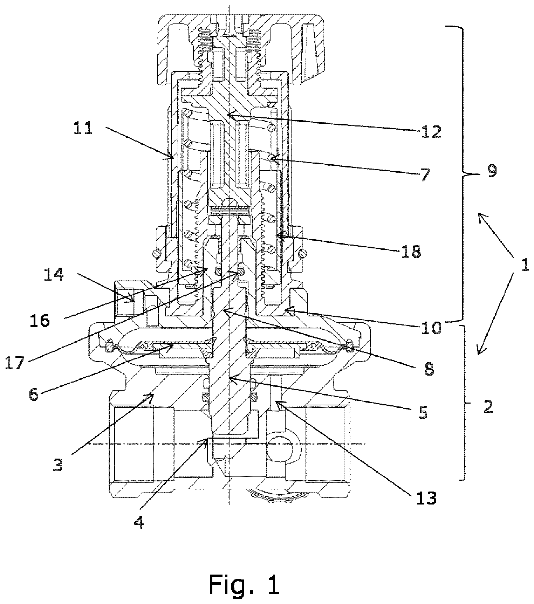

Fig. 1 shows a schematic cross section illustration of an embodiment differential pressure valve (1). The valve comprises a valve part (2) comprising a valve housing (3) forming a flow passage between an inlet and outlet. Within the flow passage is positioned a valve seat (4) cooperating with a valve cone (5) in a manner where the flow passage through the flow passage may be fully or partly blocked.

The valve cone (5) interacts with a membrane (6) such that a differential pressure across the membrane will deflect it. The valve cone (4) is attached to a spindle (8) being biased by any kind of element capable of biasing the membrane, in the following exemplified by a spring (7) positioned in a regulation part (9) connected to the valve housing of the valve part (2). The regulation part (9) in the illustrated embodiment is formed at least partly of a spring housing (10) and setting housing (11) and the means therein, such as the spring (7), spring guide (12), etc., but excluding the spindle (8).

The valve part (2) comprises the valve housing (3), valve seat (4), valve cone (5), membrane (6), spindle (8) etc.

The valve part (2) comprise parts getting in contact with the media of the system such as the fluid flowing from the inlet to the outlet, this being in contact to one side of the membrane (6) through an first pressure opening (13), and the media relevant for the pressure equalization being in contact to the second side of the membrane (6) through an second pressure opening (14).

The regulation part in the illustrated embodiment operate by a movement, such as a rotation, of a setting housing (11) relative to the valve housing (3) forces a change of the biasing, such as the tension, of the biasing member (7), e.g. a spring. In the illustrated embodiment this is realized by having a spring housing (10) being the fixed part to the valve housing (3), where the setting, the change of tension of the biasing member (7), is done by a movement, such as a rotation, of the setting housing (11) relative to the spring housing (10). A further feature according to the illustrated embodiment is a spring elevator (18) forming then transducer from the movement of the setting housing (11) to the change of biasing of the biasing member (7), such as, but not limited to, by winded interconnection.

In a more detailed description of the illustrated embodiment of example a part of the spring (7) is enclosed and in connection to a bottom position of a spring elevator (18). The spring elevator (18) further is positioned in connection to a spring housing (11), the spring housing (10) formed such that an outside spring housing part of it is encloses part of the spring elevator (18) and thus spring (7) and an inside spring housing part are being enclosed by the spring elevator (18) and thus part of the spring (7). The spring elevator (18) and spring housing (10) are in the illustrated embodiment in a winded interconnection such that a rotation of the spring elevator (18) would translocate in and up and down direction relative to the spring to change its tension and this the biasing strength due to the connection at the bottom position. In the illustrated embodiment the winded interconnection is formed relative to the inside spring housing part, but it might just as well have been to the outside spring housing part.

An end-surface of the outside spring housing part abuts against an end surface of a setting housing (11) partly enclosing the spring (7), the inside spring housing part and the spring elevator (18). The setting housing (11) and the spring elevator (18) are interconnected in a manner where a rotation of the setting housing (10) induces a rotation of the spring (7) but leaves it free to translocate up and down, such as but not limited to cock wheel principle having protrusions of at respectively the inside and outside surfaces of the parts (11, 18) interconnecting each other, or protrusions of the one of the parts (11, 18) fitting within grooves of the other.

The spindle (8) reaches out of the valve housing (1) and into an inner bore of the inside spring housing part where it is fixed to the spring guide (12) in any manner where they may be attached and detached relative to each other, such as, but not limited to, through a pin and groove connection.

In the illustrated embodiment first pressure opening (13) is directly connected to the flow path formed within the valve housing (3) whereas the second pressure opening (14) is formed to be connected to external means such as an impulse tube being fluid communication to another place at the flow circuit. In other embodiments the first pressure opening (13) is contacted to another position at the flow circuit too e.g. through an impulse tube. In a further embodiment the second pressure opening (14) is connected directly to the flow path formed within the valve housing (3) too, e.g. at the opposite side of the valve seat (4) relative to the first pressure opening (13).

The valve part (1) being in fluid contact to the flow circuit thus needs to be formed of materials sustainable to the conditions of the fluids and the pressures, and is therefore typically formed of metal.

The regulation part (9) is attached to the valve part (2) thus as to a tap extension (16) to the valve housing, but its internal is sealed from it, such as by an O-ring (17) formed within the tap extension (16). Hereby is achieved that the fluids does not get into contact with the regulation part (9) or it's internal. This makes it possible to form some or each of the parts of the regulation part (9) of cheaper materials than the valve part (2) like plastics though these would not be suitable as valve part (2) materials. This also enables the regulation part (9) to be attachable and detachable relative to the valve part (2), or valve housing (3).

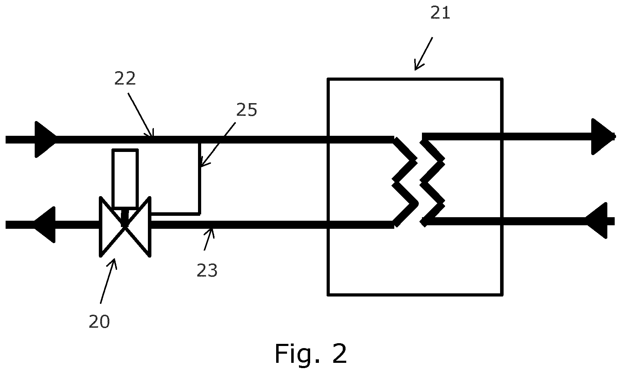

Fig. 2 illustrate one position of a differential pressure valve (20) connected to a fluid circuit such as a heating system comprising a heat exchanger (21) with a primary side forward line (22) and return line (23). In the illustrated embodiment the valve (20) positioned at the return line (23) but with an impulse tube (24) connecting the second pressure opening (14) to the forward line (22). The upper side of the membrane (5) as seen in Fig. 1 then through the second pressure opening (14) will be in pressure connection to the forward line (22) and the lower side of the membrane (5) in pressure connection to the return line (23) through the first pressure opening (13). The pressure difference over the membrane deflects it changing the opening of the valve formed by the valve cone (4) and valve seat (3) thus changing the flow rate through the valve and thereby forming a pressure regulation. Where to connect the valve however totally depends on the desired control of the valve (20).

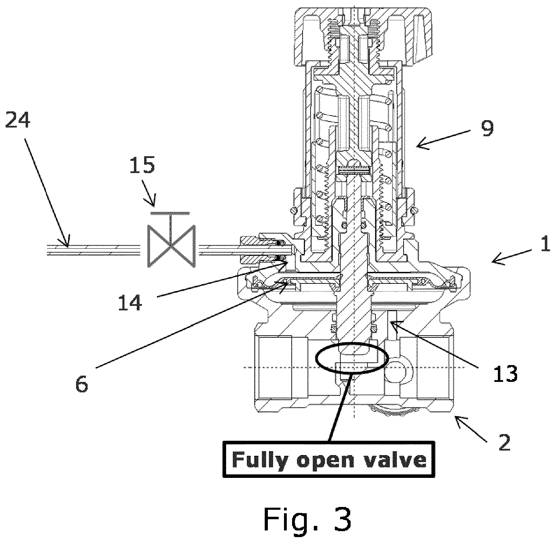

During flushing of the flow circuit and thus of the valve (1) it is and advantage if the valve (1) remains more or less fully open, or at least offers low obstruction to the flushing fluids. This could be done by introducing means to keep the valve cone (5) in its open position relative to the valve seat (4), however fig. 3 illustrate another solution.

Fig. 3 shows the valve (1) where an auxiliary valve (15) is connected in an open and close relation to the second pressure opening (14). In the illustration the auxiliary valve (15) is connected to a section of impulse tube (24) attached to the second pressure opening (14). The auxiliary valve (15) thus is adapted to close off any fluid and pressure communication to the second pressure opening (14) and could optionally be a ball valve, or any other kind of valve able to shut off all fluid and pressure communication. The valve could be manually operated or operated by an actuator optionally being remotely controlled.

The auxiliary valve (15) alternatively could be positioned partly or completely within the valve housing of the valve part (2), the essential being does not form part of the regulation part (9). This is especially relevant when the regulation part (9) is formed of more delicate parts the means for closing access through the second pressure opening (14), the means for closing off pressure and flow access to the second pressure opening (14), such as by a second valve (15), does not form part of and is not connected to the regulation part (9).

The operation of the valve (1) during flushing is the auxiliary valve (15) is closed and thereby the fluid and pressure communication through the second pressure opening (14). The membrane (6) therefore is only influenced by the pressure through the first pressure opening (13) formed as the one influencing the membrane (6) in the opening direction. This ensures that the valve (1) remains open during the flushing under the pressures of the flushing fluid.

## Claims

1. A method to flush a heating system, the heating system including a pressure balancing valve (1) for pressure regulation of the heating system, where the valve (1) comprises a membrane (6) adapted to deflect under the influence of a differential pressure across said membrane (6) to change the opening of the valve (1) thus changing the flow rate through the valve (1) and thereby forming the pressure regulation of the heating system, and first means (13) and second means (14) to communicate pressures to the opposing sides of the membrane (6), **characterized in** the method being when flushing the heating system to close the one of the first means (13) and second means (14) communicating a pressure to the membrane (6) in the closing direction of the valve (1) with an auxiliary valve (15), the auxiliary valve (15) being operated manually or by an actuator, leaving only one of the two opposing sides of the membrane (6) to be in pressure communication by the first means (13) or second means (14), such that the pressure from the flushing fluid ensures to keep the valve open (1).

2. The method according to claim 1 adapted to be used on a valve (1) with a valve part (2) in a valve housing (3) that comprises a flow communication from a fluid inlet to a flow outlet and a valve seat (4) positioned within said flow communication, a valve cone (5) adapted to change position where said position defines the valve opening being the opening between the valve seat (4) and valve cone (5).

3. The method adapted to operate on the valve (1) according to claim 2, wherein the first means (13) operate on the membrane (6) in the direction to open the valve (1) by moving the valve cone (5) away from the valve seat (4), and where the auxiliary valve (15) is connected in relation to the second means (14).

4. The method adapted to operate on the valve (1) according to claim 3. wherein flow communicating means (24) is connected to said second means (14) and where the auxiliary valve (15) is connected to the flow communicating means (24).

5. The method adapted to operate on the valve (1) according to claim 3, wherein the auxiliary valve (15) at least partly is integrated into the valve housing (3).

6. The method adapted to operate on the valve (1) according to one of claims 2-5, wherein the membrane (6) is positioned within the valve housing (3).

7. The method adapted to operate on the valve (1) according to one of claims 2-6, wherein a regulation part (9) is connected to the valve part (2) including biasing means (7) acting on the membrane (6).

8. The method adapted to operate on the valve (1) according to claim 7, wherein the regulation part (9) comprises means for changing the strength whereby the biasing means (7) acts on the membrane (6).

## Patentansprüche

1. Verfahren zum Spülen eines Heizsystems, wobei das Heizsystem ein Druckausgleichsventil (1) zur Druckregulierung des Heizsystems, wobei das Ventil (1) eine Membran (6) umfasst, die ausgelegt ist, unter der Wirkung eines Differenzialdrucks über die Membran (6) auszulenken, um die Öffnung des Ventils (1) zu ändern, wodurch die Durchflussrate durch das Ventil (1) geändert und dadurch die Druckregulierung des Heizsystems ausgebildet wird, und erste Mittel (13) und zweite Mittel (14) zum Kommunizieren von Drücken zu den entgegengesetzten Seiten der Membran (6), umfasst, **dadurch gekennzeichnet, dass** das Verfahren darin besteht, bei Spülen des Heizsystems das eine der ersten Mittel (13) und zweiten Mittel (14), die einen Druck zu der Membran (6) kommunizieren, in der Schließrichtung des Ventils (1) mit einem Hilfsventil (15) zu schließen, wobei das Hilfsventil (15) manuell oder durch einen Aktuator betätigt wird, wodurch nur eine der zwei entgegengesetzten Seiten der Membran (6) in Druckkommunikation durch das erste Mittel (13) oder zweite Mittel (14) gelassen wird, so dass der Druck von dem Spülfluid sicherstellt, dass das Ventil geöffnet (1) bleibt.

2. Verfahren nach Anspruch 1, das ausgelegt ist, an einem Ventil (1) mit einem Ventilteil (2) in einem Ventilgehäuse (3), das eine Durchflusskommunikation von einem Fluideinlass zu einem Fluidauslass und einen Ventilsitz (4), der in der Durchflusskommunikation positioniert ist, umfasst, einem Ventilkegel (5), der ausgelegt ist, die Position zu ändern, wobei die Position die Ventilöffnung, die die Öffnung zwischen dem Ventilsitz (4) und dem Ventilkegel (5) ist, definiert, verwendet zu werden.

3. Verfahren, das ausgelegt ist, an dem Ventil (1) betrieben zu werden, nach Anspruch 2, wobei das erste Mittel (13) an der Membran (6) in der Richtung zum Öffnen des Ventils (1) durch Bewegen des Ventilkegels (5) weg von dem Ventilsitz (4) betrieben wird, und wobei das Hilfsventil (15) in Relation zu dem zweiten Mittel (14) verbunden ist.

4. Verfahren, das ausgelegt ist, an dem Ventil (1) betrieben zu werden, nach Anspruch 3, wobei ein Durchflusskommunikationsmittel (24) mit dem zweiten Mittel (14) verbunden ist und wobei das Hilfsventil (15) mit dem Durchflusskommunikationsmittel (24) verbunden ist.

5. Verfahren, das ausgelegt ist, an dem Ventil (1) betrieben zu werden, nach Anspruch 3, wobei das Hilfsventil (15) zumindest teilweise in das Ventilgehäuse (3) integriert ist.

6. Verfahren, das ausgelegt ist, an dem Ventil (1) betrieben zu werden, nach einem der Ansprüche 2-5, wobei die Membran (6) in dem Ventilgehäuse (3) positioniert ist.

7. Verfahren, das ausgelegt ist, an dem Ventil (1) betrieben zu werden, nach einem der Ansprüche 2-6, wobei ein Regulierungsteil (9) mit dem Ventilteil (2) verbunden ist, der ein Vorspannmittel (7) umfasst, das auf die Membran (6) wirkt.

8. Verfahren, das ausgelegt ist, an dem Ventil (1) betrieben zu werden, nach Anspruch 7, wobei das Regulierungsteil (9) Mittel zum Ändern der Kraft, mit der das Vorspannmittel (7) auf die Membran (6) wirkt, umfasst.

## Revendications

1. Procédé pour rincer un système de chauffage, le système de chauffage incluant une soupape d'équilibrage de pression (1) pour régulation de pression du système de chauffage, où la soupape (1) comprend une membrane (6) adaptée pour se défléchir sous l'influence d'une pression différentielle de part et d'autre de ladite membrane (6) pour changer l'ouverture de la soupape (1) ainsi changeant le débit à travers la soupape (1) et ainsi formant la régulation de pression du système de chauffage, et un premier moyen (13) et un second moyen (14) pour communiquer des pressions aux côtés opposés de la membrane (6), **caractérisé en ce que** le procédé consiste, lors du rinçage du système de chauffage, à fermer l'un du premier moyen (13) et du second moyen (14) communiquant une pression à la membrane (6) dans la direction de fermeture de la soupape (1) avec une soupape auxiliaire (15), la soupape auxiliaire (15) étant actionnée manuellement ou par un actionneur, laissant seulement un des deux côtés opposés de la membrane (6) être en communication de pression par l'intermédiaire du premier moyen (13) ou du second moyen (14), de telle sorte que la pression provenant du fluide de rinçage garantisse de maintenir la soupape ouverte (1).

2. Procédé selon la revendication 1 adapté pour être utilisé sur une soupape (1) avec une partie de soupape (2) dans un logement de soupape (3) qui comprend une communication d'écoulement depuis une entrée de fluide jusqu'à une sortie d'écoulement et un siège de soupape (4) positionné à l'intérieur de ladite communication d'écoulement, un cône de soupape (5) adapté pour changer de position où ladite position définit l'ouverture de soupape, étant l'ouverture entre la siège de soupape (4) et le cône de soupape (5).

3. Procédé adapté pour fonctionner sur la soupape (1) selon la revendication 2, dans lequel le premier moyen (13) fonctionne sur la membrane (6) dans la direction pour ouvrir la soupape (1) en déplaçant le cône de soupape (5) à l'opposé du siège de soupape (4), et où la soupape auxiliaire (15) est raccordée par rapport au second moyen (14).

4. Procédé adapté pour fonctionner sur la soupape (1) selon la revendication 3, dans lequel un moyen de communication d'écoulement (24) est raccordé audit second moyen (14) et où la soupape auxiliaire (15) est raccordée au moyen de communication d'écoulement (24) .

5. Procédé adapté pour fonctionner sur la soupape (1) selon la revendication 3, dans lequel la soupape auxiliaire (15) est au moins partiellement intégrée dans le logement de soupape (3).

6. Procédé adapté pour fonctionner sur la soupape (1) selon l'une des revendications 2 à 5, dans lequel la membrane (6) est positionnée à l'intérieur du logement de soupape (3).

7. Procédé adapté pour fonctionner sur la soupape (1) selon l'une des revendications 2 à 6, dans lequel une partie de régulation (9) est raccordée à la partie de soupape (2) incluant un moyen de sollicitation (7) agissant sur la membrane (6).

8. Procédé adapté pour fonctionner sur la soupape (1) selon la revendication 7, dans lequel la partie de régulation (9) comprend un moyen pour changer la force selon laquelle le moyen de sollicitation (7) agit sur la membrane (6).
